# EUROPÄISCHE PATENTSCHRIFT

(11) **EP 3 630 606 B1**
(45) Veröffentlichungstag und Bekanntmachung des Hinweises auf die Patenterteilung: **10.01.2024**
(21) Anmeldenummer: 18731726.8
(22) Anmeldetag: 23.05.2018
(51) Int. Cl.: B64C 39/02, B64C 37/02

(54) **SYSTEM ZUM STEUERN VON UNBEMANNTEN LUFTFAHRZEUGEN IN EINEM SCHWARM, UM EIN BEWEGTES OBJEKT MIT MEHREREN KAMERAS ZU FILMEN**
SYSTEM FOR CONTROLLING UNMANNED AIRCRAFT IN A SWARM TO FILM A MOVING OBJECT WITH MULTIPLE CAMERAS
SYSTEME DE COMMANDE D'UN AVION SANS PILOTE DANS UN ESSAIM POUR FILMER UN OBJET EN MOUVEMENT AVEC PLUSIEURS CAMÉRAS

(30) Priorität: 23.05.2017 AT 5009517 U
(43) Veröffentlichungstag der Anmeldung: 08.04.2020
(73) Patentinhaber: Ars Electronica Linz GmbH & Co KG, 4040 Linz (AT)
(72) Erfinder: HÖRTNER, Horst, 4115 Kleinzell (AT)
(74) Vertreter: Röggla, Harald
(86) Internationale Anmeldenummer: PCT/AT2018/060103
(87) Internationale Veröffentlichungsnummer: WO 2018/213860

(56) Entgegenhaltungen:
- WO-A2-2016/053438
- WO-A2-2017/003538
- DE-A1-102005 020 594
- FR-A1- 3 037 429
- US-A1- 2007 288 132
- US-A1- 2017 220 037
- US-B1- 9 104 201
- US-B1- 9 442 485
- Selcuk Bayraktar ET AL: "Hybrid Modeling and Experimental Cooperative Control of Multiple Unmanned Aerial Vehicles", , 1. Dezember 2004 (2004-12-01), XP055494404, Gefunden im Internet: URL:https://repository.upenn.edu/cgi/viewc ontent.cgi?article=1022&context=cis_report s

## Beschreibung

Die Erfindung betrifft ein System zum Steuern von zumindest zwei unbemannten Luftfahrzeugen in einem Schwarmflug, wobei jedes Luftfahrzeug eine Flugsteuereinheit zum Steuern der Flugbahn des Luftfahrzeugs mittels einer Antriebseinheit und eine, mittels einem Ausrichtemittel zumindest einachsig drehbare Kamera aufweist, wobei in dem System zumindest eine Schwarmsteuereinheit zum drahtlosen Kommunizieren mit den Luftfahrzeugen vorgesehen ist.

Die Entwicklungen der letzten Jahre auf dem technischen Gebiet der unbemannten Luftfahrzeuge, im englischen Sprachgebrauch üblicherweise als "Unmanned Aerial Vehicle (UAV)" bezeichnet, insbesondere im Bereich der "Drohnen" beziehungsweise "Multicopter", haben dazu geführt, dass solche Luftfahrzeuge vermehrt für die bildliche Aufnahme von Objekten zum Einsatz kommen. Beispielsweise kann ein koordiniertes System aus mehreren Luftfahrzeugen, insbesondere Luftfahrzeuge im Schwarmflug, ein Objekt gleichzeitig aus verschiedenen Perspektiven fotografieren und/ oder filmen.

Allerdings ist der Einsatz eines solchen Schwarmverbunds zur filmischen Aufnahme von Objekten, insbesondere, wenn sich die Objekte, beispielsweise Fahrzeuge, während der Aufnahme bewegen, nur bedingt oder gar nicht möglich, da unter anderem die Flugbahnen der einzelnen Luftfahrzeuge sowie die Ausrichtungen der Kameras ständig angepasst werden müssen, was die in den Luftfahrzeugen und Steuereinheiten eingesetzte Hard- und Software überfordern kann. Weitere Herausforderungen ergeben sich aus den Sicherheitsanforderungen. So sollten beispielsweise Sicherheitsabstände in Bezug auf die zu filmenden Objekte, insbesondere Personen, und die anderen Luftfahrzeuge im System eingehalten werden.

Die FR 3037429 A1 offenbart ein System und Verfahren zur automatischen Prüfung der Oberfläche großer Objekte, wie Flugzeuge, Schiffe oder Gebäude. Das System besteht aus mehreren UAVs mit Kameras. Die UAVs können ihre Anweisungen an bestimmte Situationen anpassen und untereinander kommunizieren, um unter anderem Kollisionen zu vermeiden. Die UAVs sind außerdem jeweils einem bestimmten Teil der Oberfläche zugeordnet, was Einfluss auf die Positionen der UAVs und die Ausrichtungen der Kameras hat.

Die WO 2017/003538 A2 offenbart ein UAV zur Aufnahme von Bildern mittels einer Kamera, welche über eine 2-achsige Aufhängung dreh- und steuerbar ist, wobei die Ausrichtung der Kamera in Bezug auf ein zu filmendes Objekt ausgerichtet und angepasst werden kann.

Die WO 2017/136231 A1, die erst nach dem Prioritätstag der vorliegenden Schrift veröffentlicht wurde, zeigt ein Verfahren zum Steuern eines Drohnenschwarmes. Jede der Drohnen führt eine Kamera mit, und alle Kameras des Drohnenschwarms sollen ein Bild eines gemeinsamen Zielobjekts aufnehmen.

Der Erfindung liegt die Aufgabe zugrunde ein System zum verbesserten Steuern von unbemannten Luftfahrzeugen in einem Schwarmflug bereitzustellen, das die filmische Aufnahme von sich bewegenden Objekten ermöglicht, wobei die oben genannten Nachteile und Herausforderungen zumindest vermindert werden sollen.

Erfindungsgemäß wird diese Aufgabenstellung dadurch gelöst, dass die zumindest eine Schwarmsteuereinheit dazu ausgebildet ist, die Flugsteuereinheiten und die Ausrichtemittel während einer Aufnahme von zumindest einem zu filmenden und sich bewegenden Objekt derart zu steuern, dass eine räumliche Anordnung der Luftfahrzeuge in Bezug auf das Objekt und die Ausrichtung der optischen Achse jeder Kamera in Bezug auf das Objekt und/ oder in Bezug auf die Ausrichtung/en der optischen Achse/n der anderen Kamera/s im Wesentlichen aufrechterhalten und gegebenenfalls im Wesentlichen in Echtzeit angepasst wird.

Bei dem erfindungsgemäßen System wird die Steuerung der Luftfahrzeuge und der Kameras von zumindest einer gemeinsamen Schwarmsteuereinheit übernommen und koordiniert. Dabei steuert die Schwarmsteuereinheit insbesondere die räumliche Anordnung der Luftfahrzeuge und die Ausrichtung der Kameras in Bezug auf das/ die zu filmende/n Objekt/e. Hierdurch wird beispielsweise erstmals der Einsatz eines derartigen Systems mit handelsüblichen Drohnen und Kameras möglich. Gleichzeitig wird die Steuerung einer vorbestimmten Kombination und/ oder Abfolge von Aufnahmen der verschiedenen Kameras erleichtert, wodurch beispielsweise die Planbarkeit und Ausführbarkeit von filmischen Szenen verbessert und der zugehörige Aufwand reduziert werden können.

Erfindungsgemäß erhält die Schwarmsteuereinheit die Ausrichtung der optischen Achse einer Kamera in Bezug auf die Ausrichtung/en der optischen Achse/n der anderen Kamera/s derart aufrecht und/ oder passt die Ausrichtung dieser optischen Achse derart an, dass ein Sichtfeld oder Blickfeld dieser Kamera frei von einem Luftfahrzeug und/ oder einer Kamera des Systems ist.

In einer vorteilhaften Ausgestaltung ist die zumindest eine Schwarmsteuereinheit zum Steuern, insbesondere Aktiveren und Deaktivieren, der Kameras ausgebildet. Hierdurch kann die Steuerung der Luftfahrzeuge vorteilhaft mit der Steuerung von Aufnahmesequenzen, insbesondere die zeitliche Abfolge von Foto- und/ oder Filmaufnahmen, der Kameras kombiniert werden.

Folgt die räumliche Anordnung der Luftfahrzeuge, und folglich der Kameras, in Bezug auf das Objekt festgelegten geometrischen Zusammenhängen, beispielsweise einer kreisförmigen Anordnung der Kameras in einem "Kameraring", tritt ein weiterer, unerwarteter technischer Effekt auf. Dadurch, dass der Kameraring mittels der Schwarmsteuereinheit koordiniert durch den Raum bewegbar ist, kann eine Szene, insbesondere ein Bewegungsablauf eines zu filmenden Objekts wie beispielsweise ein Auto in Fahrt, ein Flugzeug im Flug oder ein Fallschirmspringer im Fall, aufgezeichnet werden, die den Durchmesser des Kamerarings bei weitem überschreitet, wenn Kameraring und Szene räumlich und zeitlich koordiniert durch den Raum bewegt werden. Dies ist mit den aus dem Stand der Technik bekannten Systemen oder Verfahren, die beispielsweise auf einer fixierten und räumlich begrenzten Anordnung von Kameras in einem "Bluescreen"/ "Greenscreen"-Studio beruhen, nicht möglich, da sich hierbei die zu filmende Szene immer innerhalb des feststehenden Kameraringes befinden muss, sodass Aufnahmen mit sich in einem Ausmaß jenseits des Kamerarings bewegenden oder sehr großen Objekten nicht oder nur sehr begrenzt möglich sind. Zum Ermitteln der "virtuellen Kamerafahrt" aus den verschiedenen Aufnahmen muss bei diesen bekannten Systemen oder Verfahren üblicherweise zusätzlich auf die sehr aufwendige Unterstützung durch CGI ("Computer Generated Imagry") zurückgegriffen werden.

Durch das erfindungsgemäße System können folglich erstmals Aufnahmeverfahren mit bislang unerreichten filmischen Effekten, beispielsweise das "Spatial Flow Motion"- oder das "Bullet-Time"-Verfahren, bei sich entsprechend bewegenden oder entsprechend großen Objekten angewandt werden. Die entsprechende "Bewegung" beziehungsweise der entsprechende "Bewegungsablauf" des/ der Objekts/e bezieht sich hierbei auf eine translatorische Bewegung in einem Ausmaß, das größer ist als ein konventionelles Filmset, beispielsweise ein "Bluescreen"/ "Greenscreen"-Studio, für derartige Aufnahmen.

Sind zweckmäßig in der räumlichen Anordnung die Luftfahrzeuge entlang einer im Wesentlichen ebenen oder schraubenförmigen Kreisbahn um eine Mittelpunktsachse angeordnet, wobei sich das zu filmende Objekt vorzugsweise im Bereich der Mittelpunktsachse befindet, wobei die Abstände benachbarter Luftfahrzeuge entlang der Kreisbahn vorzugsweise im Wesentlichen gleich sind und sich die Kreisbahn in einer, gegebenenfalls projizierten, Kreisbahnebene entlang eines Winkels von zumindest 90 Grad, vorzugsweise von zumindest 180 Grad, mehr vorzugsweise von zumindest 270 Grad, besonders vorzugsweise von zumindest 360 Grad, erstreckt, kann so beispielsweise das "Spatial Flow Motion"- oder das "Bullet-Time"-Verfahren bei sich entsprechend bewegenden Objekten angewendet werden.

Sind alternativ in der räumlichen Anordnung die Luftfahrzeuge entlang einer im Wesentlichen geraden Linie angeordnet, wobei sich das zu filmende Objekt vorzugsweise im Wesentlichen parallel zu der Linie bewegt und die Abstände benachbarter Luftfahrzeuge entlang der Linie vorzugsweise im Wesentlichen gleich sind, kann so beispielsweise eine vereinfachte Form des "Spatial Flow Motion"- oder"Bullet-Time"-Verfahrens angewendet werden.

Vorteilhaft weist zumindest eines der Luftfahrzeuge zumindest zwei Kameras auf, wobei die Kameras in einer festen geometrischen Anordnung, vorzugsweise entlang einer im Wesentlichen ebenen oder schraubenförmigen Kreisbahn, an dem Luftfahrzeuge oder dem Ausrichtemittel angebracht sind, oder weisen zumindest zwei Luftfahrzeuge gemeinsam zumindest zwei Kameras auf, wobei die Kameras in einer festen geometrischen Anordnung, vorzugsweise entlang einer im Wesentlichen ebenen oder schraubenförmigen Kreisbahn, an einem gemeinsamen Haltemittel einem gemeinsamen Ausrichtemittel angebracht sind. So kann vorteilhaft mit einer oder nur einer geringen Anzahl, beispielsweise vier, an festen geometrischen Anordnungen von Kameras, die an einem und/ oder mehreren (gemeinsamen) Haltemitteln oder Ausrichtemitteln von einem und/ oder mehreren, beispielsweise vier, Luftfahrzeug/en befestigt sind, die räumliche Anordnung der Luftfahrzeuge und/ oder der Kameras bereitgestellt werden, beispielsweise ein voller Kreis von 360 Winkelgrad mittels vier festen geometrischen Anordnungen in Viertelkreisen zu je 90 Winkelgrad, wobei jede feste geometrische Anordnung an einem Luftfahrzeug befestigt ist.

In einer vorteilhaften Ausgestaltung des Systems weisen die Luftfahrzeuge jeweils zumindest eine Sensoreinheit zum Ermitteln von Abstandsinformationen auf, wobei die Schwarmsteuereinheit dazu ausgebildet ist, die Anordnung der Luftfahrzeuge und/ oder der optischen Achsen der Kameras anhand der Abstandsinformationen aufrecht zu erhalten und/ oder anzupassen.

In einer weiteren vorteilhaften Ausgestaltung des Systems weist das zu filmende Objekt ein Positionsbestimmungsmittel zum Ermittelten seiner Positionen auf, wobei die Schwarmsteuereinheit zur drahtlosen Kommunikation mit dem Positionsbestimmungsmittel und weiters dazu ausgebildet ist, die Anordnung der Luftfahrzeuge und/ oder der optischen Achsen der Kameras anhand der Positionen des zu filmenden Objekts aufrecht zu erhalten und/ oder anzupassen.

In einer alternativen Ausgestaltung des Systems weist jedes Luftfahrzeug eine, vorzugsweise modulare, Schwarmsteuereinheit auf, die zum Steuern der Flugsteuereinheit und des Ausrichtemittels des Luftfahrzeugs und zum drahtlosen Kommunizieren mit den anderen Schwarmsteuereinheiten ausgebildet ist. Hierdurch kann gegebenenfalls auf eine externe Schwarmsteuereinheit, beispielsweise eine Bodenschwarmsteuereinheit, verzichtet werden.

Die Erfindung stellt außerdem ein Verfahren zum drahtlosen Steuern von zumindest zwei unbemannten Luftfahrzeugen in einem Schwarm mittels zumindest einer Schwarmsteuereinheit bereit, wobei jedes Luftfahrzeug eine Flugsteuereinheit und eine, mittels einem Ausrichtemittel zumindest einachsig drehbare Kamera aufweist, wobei die zumindest eine Schwarmsteuereinheit dazu ausgebildet ist, die Flugsteuereinheiten und die Ausrichtemittel anhand der folgenden Verfahrensschritte zu steuern:
A) Ansteuern der Luftfahrzeuge in eine räumliche Anordnung in Bezug auf zumindest ein zu filmendes Objekt;
B) Ausrichten der optischen Achse jeder Kamera in Bezug auf das Objekt und/ oder in Bezug auf die Ausrichtung/en der optischen Achse/n der anderen Kamera/s;
C) Aufrechterhalten und gegebenenfalls Anpassen, im Wesentlichen in Echtzeit, der räumlichen Anordnung der Luftfahrzeuge in Bezug auf das sich bewegende Objekt und der Ausrichtung der optischen Achse jeder Kamera in Bezug auf das sich bewegende Objekt und/ oder in Bezug auf die Ausrichtung/en der optischen Achse/n der anderen Kamera/s,
wobei jedes Luftfahrzeug eine, vorzugsweise modulare, Schwarmsteuereinheit aufweist und wobei in dem Verfahrensschritt C) die räumliche Anordnung der Luftfahrzeuge in Bezug auf das sich bewegende Objekt und die Ausrichtung der optischen Achse jeder Kamera in Bezug auf das sich bewegende Objekt und/ oder in Bezug auf die Ausrichtung/en der optischen Achse/n der anderen Kamera/s im Wesentlichen in Echtzeit mittels der Schwarmsteuereinheiten angepasst wird.

Das erfindungsgemäße System und das erfindungsgemäße Verfahren ermöglichen unter anderem, dass zumindest ein sich bewegendes Objekt unter vorbestimmten oder im Wesentlichen in Echtzeit ermittelten Winkeln fotografiert und/ oder gefilmt wird, wobei sichergestellt wird, dass (i) keine andere Kamera und kein anderes Luftfahrzeug des Systems im Sichtfeld einer Kamera auftaucht, und wobei ermöglicht wird, dass (ii) die "virtuelle Kamerafahrt" nicht nur in einer Ebene rund um das Objekt schwenkbar ist, sondern unterschiedliche Höhen und Winkel eingenommen werden können.

Im Folgenden werden das erfindungsgemäße System und das erfindungsgemäße Verfahren in nicht einschränkender Weise anhand von, in den Zeichnungen dargestellten beispielhaften Ausgestaltungen näher erläutert.
Figur 1 zeigt in einer schematischen Ansicht von oben ein System gemäß einer ersten Ausgestaltung der Erfindung.
Figur 2 zeigt in einer perspektivischen schematischen Ansicht ein unbemanntes Luftfahrzeug zur Anwendung in einem System gemäß der Erfindung.
Figur 3 zeigt in einer schematischen Ansicht von oben das System gemäß Figur 1.
Figur 4 zeigt in einer perspektivischen schematischen Ansicht drei unbemannte Luftfahrzeuge zur Anwendung in einem System gemäß der Erfindung.

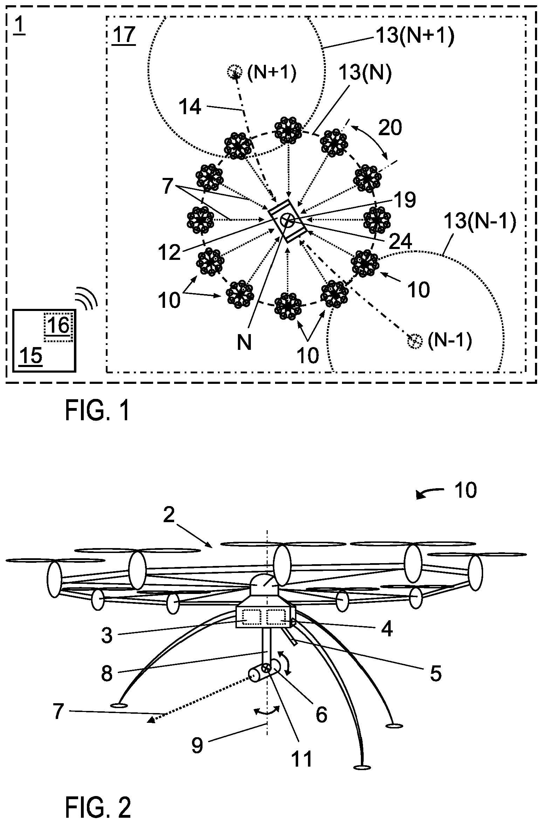

Figur 1 zeigt beispielhaft ein erfindungemäßes System 1 gemäß einer ersten Ausgestaltung. Das System 1 weist eine als eigenständige Bodenschwarmsteuereinheit 15 ausgebildete Schwarmsteuereinheit auf. Die Bodenschwarmsteuereinheit 15 ist über eine als Funkeinheit ausgebildete Kommunikationseinheit 16 zum drahtlosen Kommunizieren mit einer Mehrzahl, im vorliegenden Beispiel zwölf (12), an unbemannten Luftfahrzeugen 10 des Systems 1 ausgebildet. In der Praxis können bis zu mehrere einhundert (100) Luftfahrzeuge 10 vorgesehen sein.

Die Hardware der Bodenschwarmsteuereinheit 15 kann beispielsweise ein handelsüblicher Computer, ein Laptop-Computer, ein Tablet-Computer oder ein Smartphone sein. Die Kommunikationseinheit 16 kann über jede Art von, aus dem Stand der Technik bekannte drahtlose Kommunikation mit den Luftfahrzeugen 10 kommunizieren, die eine entsprechende Reichweite ermöglicht.

Figur 2 zeigt beispielhaft ein unbemanntes Luftfahrzeug 10 zur Anwendung in dem System 1. Das Luftfahrzeug 10 kann dabei als handelsübliche, zum Einzelflug hergestellte Drohne, genauer bezeichnet als sogenannter "Oktocopter" ausgeführt sein. Diesbezüglich ist eine Antriebseinheit 2 des Luftfahrzeugs 10 aus acht Rotoreinheiten gebildet, die beispielsweise mittels acht Elektromotoren angetrieben werden. Die Antriebseinheit 2 ermöglicht den Flug des Luftfahrzeugs 10 im Luftraum.

Ein "Okotocopter" ist eine Variante eines "Multicopters" mit acht Rotoreinheiten. Das Luftfahrzeug 10 kann alternativ als eine andere Variante eines Multicopters ausgebildet sein, beispielsweise als handelsüblicher "Quadcopter" mit vier Rotoreinheiten, usw., wobei im Wesentlichen jede Anzahl von Rotoreinheiten möglich ist. Das unbemannte Luftfahrzeug 10 kann aber auch als ein beliebiges, in seiner Position im Luftraum stabilisierbares Luftfahrzeug ausgebildet sein (etwa als Zeppelin oder Ballon).

Der Begriff "Luftraum" bezieht sich dabei auf jeden möglichen Raum oberhalb eines künstlichen oder natürlichen Bodens innerhalb oder außerhalb eines künstlichen oder natürlichen Raumes beziehungsweise Gebäudes.

Das Luftfahrzeug 10 weist weiters eine Flugsteuereinheit 3 auf, die zum Ansteuern der Antriebseinheit 2 des Luftfahrzeugs 10 im Luftraum ausgebildet ist, um die Flugbahn des Luftfahrzeugs 10 zu steuern. Die Flugsteuereinheit 3 empfängt die Steuerinformationen von der Bodenschwarmsteuereinheit 15, beispielweise über eine Kommunikationseinheit 5 am Luftfahrzeug 10. Mit der Bodenschwarmsteuereinheit 15 ist es somit möglich, das Luftfahrzeug 10 mit einer bestimmten Fluggeschwindigkeit an bestimmte Positionen gemäß von Positionsinformationen im Luftraum zu steuern. Hierzu wird die Antriebseinheit 2 von der Flugsteuereinheit 3 entsprechend gesteuert. Das Luftfahrzeug 10 benötigt folglich keine weitere technische Funktionalität und/ oder "Intelligenz" um eine Flugbahn im Luftraum auszuführen. Die Positionsinformationen werden im Wesentlichen in Echtzeit empfangen oder übermittelt, wodurch eine reibungsfreie Kommunikation gewährleistet wird, und wodurch die vom Luftfahrzeug 10 anzusteuernde Position im Luftraum gegebenenfalls jederzeit aktualisiert werden kann.

Die Positionsinformationen können alternativ oder zusätzlich in einer Speichereinheit 4 gespeichert sein. Die Flugsteuereinheit 3 kann die Positionsinformationen somit auch von der Speichereinheit 4 empfangen und das Luftfahrzeug 10 entsprechend steuern, wobei gegebenenfalls die Bodenschwarmsteuereinheit 15 die Flugbahn entsprechend überwacht und/ oder anpasst. Zusätzlich kann die Flugsteuereinheit 3 die aktuellen Positionsinformationen auf die Speichereinheit 4 übermitteln, wo sie gespeichert werden, beispielsweise zur Kontrolle oder als Backup.

Die Positionsinformationen sind beispielsweise "Global Positioning System (GPS)"-basierte, dreidimensionale Koordinaten im Luftraum, also beispielsweise Daten im GPS Exchange Format (GPX). Die Daten im GPX-Format können Geodaten, also die geografischen Koordinaten Breite, Länge und Höhe, beinhalten. Jedes Luftfahrzeug 10, die Bodenschwarmsteuereinheit 15 und/ oder jede Flugsteuereinheit 3 weisen diesbezüglich gegebenenfalls einen GPS-Empfänger auf. Alternativ können die Daten auch auf dem Galileo-, GLONASS-, Beidou/Compass- oder jedem weiteren Satellitennavigations- und/ oder Zeitgebungssystem oder auf einem lokalen oder gebäudebasierten Navigationssystem zur Positionsbestimmung des Luftfahrzeuges 10 innerhalb und außerhalb von Gebäuden basieren (etwa Positionsbestimmung durch Übermittlung von Sendesignalen, Optische Positionsbestimmungssysteme etc.). Die Flugbahn des Luftfahrzeuges 10 entspricht einer zeitlichen Abfolge von Positionen, die ebenfalls Daten im GPX-Format sein können. Das Ausmaß der zeitlichen Abfolge bestimmt die Fluggeschwindigkeit des Luftfahrzeugs 10.

Das, mehrere oder jedes Luftfahrzeug 10 weist weiters eine Kamera 6 zum bildlichen Aufnehmen eines sich gegebenenfalls bewegenden Objekts 12 auf. Im Beispiel von Figur 1 ist das Objekt 12 als Automobil ausgebildet. Die Bodenschwarmsteuereinheit 15 ist zum Steuern, insbesondere zum Aktiveren und Deaktivieren, der Kameras 6 ausgebildet. Werden die Kameras 6 durch die Bodenschwarmsteuereinheit 15 gesteuert, so wird beispielsweise mittels der die Bodenschwarmsteuereinheit 15 eine Fotografie gemacht, eine Filmaufnahme gestartet oder die Vergrößerung des Objektivs einer Kamera 6 verändert. Die Kameras 6, beziehungsweise die Objektive der Kameras 6, "blicken" entlang einer optischen Achse 7 und zeichnen so, beispielsweise auf einem Bildsensor, ein Bild oder einen Film entsprechend einem Blick- oder Sichtfeld der jeweiligen Kamera 6 auf. Das Funktionsprinzip und weitere Einzelheiten zur Fotografie und Filmaufnahme sind dem Fachmann bekannt.

Die, mehrere oder jede Kamera 6 ist an einem Ausrichtemittel 8 befestigt, welches mindestens einachsig, etwa um eine Drehachse 11 des Ausrichtemittels 8 drehbar ist. Die Bodenschwarmsteuereinheit 15 ist zum Steuern der Ausrichtung der optischen Achse 7 der Kamera 6 mittels des Ausrichtemittels 8, beispielsweise anhand von Ausrichteinformationen, ausgebildet. Die weitere Ausrichtung der optischen Achse 7 kann über eine Drehung des Luftfahrzeugs 10 um seine Symmetrieachse 9 erreicht werden, wodurch die optische Achse 7 in jede beliebige Raumrichtung ausgerichtet werden kann. Die Drehachse 11 ist vorteilhaft im Wesentlichen rechtwinklig zur Symmetrieachse 9 angeordnet. Während sich das Luftfahrzeug 10 in einer stabilen, im Wesentlichen statischen Position im Luftraum befindet, ist die Symmetrieachse 9 im Wesentlichen lotrecht und die Drehachse 11 folglich horizontal ausgerichtet. Alternativ ist das Ausrichtemittel 8 zwei- oder dreiachsig drehbar, beispielsweise wenn es als handelsübliches "Gimbal" (englische Bezeichnung für kardanische Aufhängung/ Lagerung) ausgebildet ist. Die dreiachsige Ausrichtung der optischen Achse 7 der Kamera 6 kann somit über die Ausrichtung des Luftfahrzeugs 10 und das Ausrichtemittel 8 oder ausschließlich über das Ausrichtemittel 8 erfolgen.

Alternativ kann die Kamera 6 auch in einem Gehäuse des Luftfahrzeugs 10 integriert sein, wobei das Objektiv, also die optischen Achse 7, der Kamera 6 zumindest einachsig, vorzugsweise dreiachsig, beispielsweise über ein Kugelgelenk, ausrichtbar ausgebildet ist. Mehrere, also zumindest zwei, Luftfahrzeuge 10 oder jedes der Luftfahrzeuge 10 können alternativ eine Mehrzahl an Kameras 6, beispielsweise zwei bis zehn oder mehr als zehn, wobei die Kameras 6 in einer festen geometrischen Anordnung, vorzugsweise entlang einer im Wesentlichen ebenen oder schraubenförmigen Kreisbahn, an einem Haltemittel oder dem Ausrichtemittel 8 angebracht sind, oder es können zwei oder mehrere Luftfahrzeuge 10 gemeinsam eine Mehrzahl an Kameras 6, also zumindest zwei Kameras 6, aufweisen, wobei die Kameras 6 in einer festen geometrischen Anordnung, vorzugsweise entlang einer im Wesentlichen ebenen oder schraubenförmigen Kreisbahn, an einem gemeinsamen Haltemittel einem gemeinsamen Ausrichtemittel angebracht sind. Diese Mehrzahl an Kameras 6, die in einer festen geometrischen Anordnung in/ an dem/ den Luftfahrzeug/en 10, (gemeinsamen) Haltemittel/n oder dem / den (gemeinsamen) Ausrichtemittel/n 8 angebracht sein, können gemeinsam oder unabhängig voneinander, insbesondere mittels des/ der Ausrichtemittel/s 8 ausgerichtet werden und von der Bodenschwarmsteuereinheit 15 gesteuert werden. So können unter anderem mit verhältnismäßig wenigen Luftfahrzeugen 10 eine Vielzahl von Aufnahmeperspektiven bereitgestellt werden.

Die Ausrichteinformationen können beispielsweise eine Winkel- und Zeitinformation beinhalten, also beispielsweise in welchem Winkel um die Symmetrieachse 9 und/ oder Drehachse 11 das Ausrichtemittel 8 zu welchem Zeitpunkt wie ausgerichtet sein soll. Dabei können die Ausrichteinformationen von der Position des Objekts 12 abhängen und folglich mit den Positionsinformationen zeitlich oder räumlich synchronisiert sein, wodurch die Ausrichtung der optischen Achse 7 der Kamera 6 jedes Luftfahrzeugs 10 an die jeweilige aktuelle Position des Objekts 12 angepasst ist und/ oder werden kann.

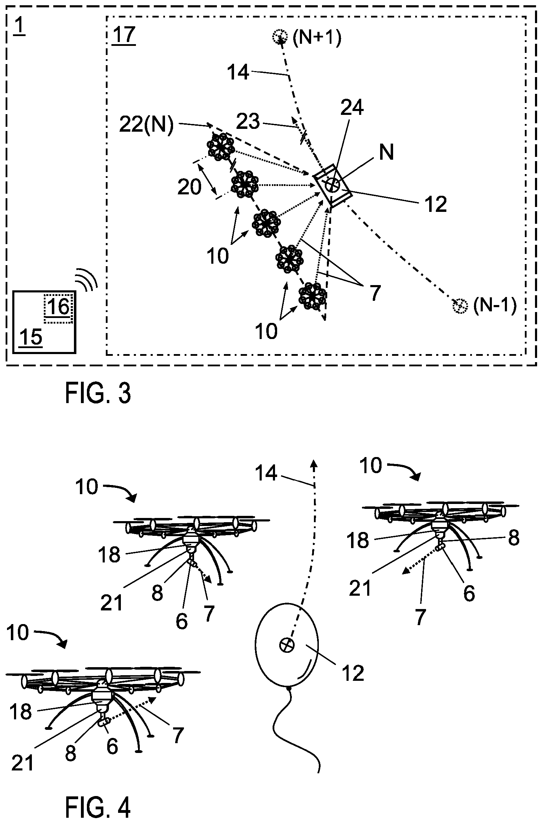

Die Ausrichteinformationen der optischen Achse 7 jeder Kamera 6 können weiters von der Ausrichtung der optischen Achsen 7 aller anderen Kameras 6 des Systems 1 abhängig sein. Hierdurch kann beispielsweise verhindert werden, dass sich unbeabsichtigt eine andere Kamera 6 und/ oder ein anderes Luftfahrzeug 10 des Systems 1 im Sichtfeld einer Kamera 6 eines Luftfahrzeugs 10 befindet, indem die Ausrichtung der optischen Achse 7 entsprechend eingestellt und/ oder angepasst wird. Dies ist insbesondere vorteilhaft, wenn sich das zu filmende Objekt 12 in derselben oder einer ähnlichen Höhe wie die Luftfahrzeuge 10 befindet, wie das beispielsweise in Figur 4 dargestellt ist.

Das erfindungsgemäße System 1 ermöglicht folglich mittels der Bodenschwarmsteuereinheit 15, also mittels der Schwarmsteuereinheit, die Flugsteuereinheiten 3 und die Ausrichtemittel 8 während einer Aufnahme von zumindest einem zu filmenden und sich bewegenden Objekt 12 derart zu steuern, dass (i) eine räumliche Anordnung 13 der Luftfahrzeuge 10 in Bezug auf das Objekt 12 und (ii) die Ausrichtung der optischen Achse 7 jeder Kamera 6 in Bezug auf das Objekt 12 und/ oder in Bezug auf die Ausrichtung/en der optischen Achse/n 7 der anderen Kamera/s 6 im Wesentlichen aufrechterhalten und gegebenenfalls im Wesentlichen in Echtzeit angepasst wird. Hierbei können die Luftfahrzeuge 10 mittels der Bodenschwarmsteuereinheit 15 in einem Schwarmverbund in Bezug auf einen Bewegungsablauf 14, beispielsweise eine Fahrstrecke oder eine Flugbahn, des zu filmenden Objekts 12 gesteuert werden. So kann eine große Menge, beispielweise 100 und mehr, an Luftfahrzeugen 10 auf der Grundlage von Schwarmintelligenz bewegt werden.

"Schwarmintelligenz" bedeutet in diesem Zusammenhang spezifische Vorteile des Schwarmverbundflugs, insbesondere die kollektive Bewegung mehrerer Individuen, in diesem Fall mehrerer Luftfahrzeuge 10, im Schwarm anhand der Bewegung einzelner Weniger, in diesem Fall das zu filmende Objekt 12, und/ oder die ständige Anpassung der Abstände der einzelnen Individuen, in diesem Fall der einzelnen Luftfahrzeuge 10, in gegenseitiger Abhängigkeit der am nächsten benachbarten Individuen. "Schwarmflug" bedeutet in diesem Zusammenhang das Vermögen des Systems 1 die Luftfahrzeuge 10 automatisiert und möglichst bei gleichem Abstand 20 in einer vorgegebenen anzupassenden räumlichen Anordnung 13 durch einen gemeinsamen (Luft-)Raum zu bewegen.

Weiters ist in Figur 1 eine Flugsicherheitszone 17 definiert, wobei die Luftfahrzeuge 10 mittels der Bodenschwarmsteuereinheit 15 innerhalb dieser Flugsicherheitszone 17 gesteuert werden.

Das zuvor Beschriebene, das anhand der Figuren 1 und 2 veranschaulicht ist, wird im Folgenden gemäß einem beispielhaften erfindungsgemäßen Verfahren beschrieben:
In oder während einem Verfahrensschritt A) wurden die Luftfahrzeuge 10 in die räumliche Anordnung 13 in Bezug auf das zu filmende Objekt 12, das in diesem Beispiel ein Automobil ist, gebracht. Das Objekt 12 befand sich zu diesem Zeitpunkt in der Position (N-1), welche sich am Boden, also in Betriebslage unterhalb der sich im Luftraum befindlichen Luftfahrzeuge 10, befindet. Die Luftfahrzeuge 10 sind in einem Kameraring entlang einer im Wesentlichen ebenen Kreisbahn um eine Mittelpunktsachse 19 angeordnet, wobei sich das zu filmende Objekt 12 vorzugsweise ständig im Bereich dieser Mittelpunktsachse 19 befindet. Die Abstände 20 benachbarter Luftfahrzeuge 10 entlang der Kreisbahn sind vorzugsweise im Wesentlichen gleich. Die Kreisbahn erstreckt sich entlang eines Winkels von 360 Grad. Die Kreisbahn kann alternativ schraubenförmig sein und sich entlang eines anderen Winkels erstrecken. Die räumliche Anordnung 13 der Luftfahrzeuge 10 in Bezug auf das zu filmende Objekt 12 ist also in vorliegendem Beispiel als virtueller Kegel ausgebildet, wobei sich das Objekt 12 im Wesentlichen im Bereich der Spitze des Kegels, die in Figur 1 jeweils mit den Positionen (N-1), (N) und (N+1) zusammenfällt, befindet und die Luftfahrzeuge 10 in regelmäßigen Abständen 20 in der Grundfläche des Kegels, die im vorliegenden Beispiel mit der Kreisbahnebene zusammenfällt, entlang des Grundflächenumfangs angeordnet sind.

In oder während einem Verfahrensschritt B) werden die optischen Achsen 7 aller Kameras 6 in Bezug auf das Objekt 12 ausgerichtet. Da sich im vorliegenden Beispiel das Objekt 12 in Betriebslage unterhalb der Luftfahrzeuge 10 befindet und bewegt, ist eine Ausrichtung in Bezug auf die optischen Achsen 7 der anderen Kameras 6 nicht nötig, da sich eine annehmbare Ausrichtung aller optischen Achsen 7 automatisch ergibt, sobald die Kameras 6 auf das Objekt 12 ausgerichtet sind.

Das Objekt 12 bewegt sich anhand eines Bewegungsablaufs 14, wobei in Figur 1 drei aufeinanderfolgende Positionen (N-1), aktuelle Position (N) und (N+1) zu drei verschiednen Zeitpunkten dargestellt sind.

In oder während einem Verfahrensschritt C) wird mittels der Bodenschwarmsteuereinheit 15 die räumliche Anordnung 13 der Luftfahrzeuge 10 in Bezug auf das sich bewegende Objekt 12 und die Ausrichtung der optischen Achse 7 jeder Kamera 6 in Bezug auf das sich bewegende Objekt 12 zu jedem Zeitpunkt im Wesentlichen in Echtzeit aufrecht erhalten und/ oder angepasst, wobei in Figur 1 die räumliche Anordnung 13 in Bezug auf das sich bewegende Objekt 12 an dessen Positionen (N-1), (N) und (N+1) gesondert dargestellt beziehungsweise angedeutet ist. Dabei ermittelt die Bodenschwarmsteuereinheit 15 zu jedem Zeitpunkt die aktuelle und/ oder gespeicherte Position und Bewegungsrichtung des Objekts 12 und passt Flugbahn und Ausrichtung des Luftfahrzeugs 10 sowie die Ausrichtemittel 8 entsprechen an. Dies kann mittels der Bodenschwarmsteuereinheit 15 beispielsweise durch die fortwährende Kommunikation der aktuellen Positionen und Bildausschnitte, also der Sichtfelder der Kameras 6, der Luftfahrzeugs 10 an alle anderen Luftfahrzeuge 10 erreicht werden. Die Positionsinformationen und die Ausrichteinformationen berücksichtigen in diesem Fall nicht nur die Position und Raumlage des zu filmenden Objektes 12, sondern auch die Positionen und Bildausschnitte aller beteiligten Luftfahrzeuge 10. Darüber hinaus, wird bei der Berechnung jeder Position der Luftfahrzeuge 10 und jeder Ausrichtung der optischen Achse 7 die Zielsetzung des gewünschten beziehungsweise zu ermittelnden Kamerapfades der resultierenden "virtuellen Kamera" berücksichtigt. Alle zuvor beschriebenen Parameter fließen als wesentliche Einflussgrößen bei dem Einsatz eines erfindungsgemäßen Systems und bei der Ausführung eines erfindungsgemäßen Verfahrens ein.

Die Ermittlung der Position des Objekts 12 kann beispielsweise mittels der Optik der Kamera 6 und entsprechender Software, mittels von durch Sensoreinheiten 21 (Figur 4) der Luftfahrzeuge 10 ermittelten Abstandsinformationen oder mittels durch ein Positionsbestimmungsmittel 24, beispielsweise ein GPS-Empfänger, der am oder im zu filmenden Objekts 12 angebracht ist, ermittelte Positionen des zu filmenden Objekts 12 erfolgen.

Während des gesamten Verfahrens, insbesondere während des Verfahrensschritts C), also während des Bewegungsablaufs 14 des Objekts 12, kann die die Bodenschwarmsteuereinheit 15 auch die Kameras 6 der Luftfahrzeuge 10 steuern, insbesondere aktivieren oder deaktivieren. So kann mit der in Figur 1 dargstellten räumlichen Anordnung 13 der Luftfahrzeuge 10 in Bezug auf das zu filmende Objekt 12 beispielsweise das "Spatial Flow Motion"- oder das "Bullet-Time"-Verfahren zur Aufnahme des Objekts 12 angewandt werden. Hierbei kann, durch die Bewegung des gesamten Kameraringes, also der räumlichen Anordnung 13, durch den (Luft-)Raum, beispielsweise eine Szene (ein Bewegungsablauf 14) aufgezeichnet werden, die den Durchmesser des Kameraringes bei weitem überschreitet. So kann das Objekt 12, also das Auto in der Fahrt, im "Spatial Flow Motion"- oder dem "Bullet-Time"-Verfahren aufgezeichnet werden, wenn der Kameraring sich in derselben Geschwindigkeit mit der Szene, also unter anderem mit dem Bewegungsablaufs 14 des Objekts 12, durch den (Luft-)Raum bewegt. Dabei ist darauf zu achten, dass zu keinem Zeitpunkt eine Kamera 6 die im Kameraring gegenüberliegenden Kameras 6 oder Luftfahrzeuge 10 im Bildausschnitt, also ihrem Sichtfeld, hat, weshalb die Ausrichtungen der optischen Achsen 7 mit der Bewegung der Kameras 6 im (Luft-)Raum im Wesentlichen in Echtzeit synchronisiert werden.

Die Szene und/ oder der Bewegungsablauf 14 können vor einer Aufnahme bekannt und beispielsweise auf der oder den Speichereinheiten 4 gespeichert sein. Eine räumliche Anordnung, im vorliegenden Fall die räumliche Anordnung 14, kann jederzeit im Wesentlichen in Echtzeit verändert werden, beispielsweise indem die Flughöhe der Luftfahrzeuge 10 oder die Ausrichtungen der optischen Achsen 7 der Kameras 6 verändert werden. Während des Verfahrens können die Luftfahrzeuge 10 unterschiedliche Höhen und die Kameras 6 unterschiedliche Winkel, also unterschiedliche Ausrichtungen der optischen Achsen 7, einnehmen.

In Figur 3 sind die Luftfahrzeuge 10 in eine alternative räumliche Anordnung 22 in Bezug auf das zu filmende Objekt 12 gebracht. Das Objekt 12 folgt dem Bewegungsablauf 14 und befindet sich zu dem in Figur 3 dargestellten Zeitpunkt an der Position (N), welche sich am Boden, also in Betriebslage unterhalb der sich im Luftraum befindlichen Luftfahrzeuge 10, befindet. Die Luftfahrzeuge 10 sind entlang einer im Wesentlichen geraden Linie angeordnet, wobei sich das zu filmende Objekt 12 im Zeitpunkt der der Position (N) in eine Richtung 23 parallel zu der der Linie bewegt. Die Linie kann alternativ jede Form haben. Die Abstände 20 benachbarter Luftfahrzeuge 10 entlang der Linie sind vorzugsweise im Wesentlichen gleich. Die räumliche Anordnung 22 der Luftfahrzeuge 10 in Bezug auf das zu filmende Objekt 12 ist also in vorliegendem Beispiel als virtuelles, vorzugsweise ebenes gleichschenkeliges, Dreieck ausgebildet, wobei sich das Objekt 12 im Wesentlichen im Bereich einer Spitze des Dreiecks, die in Figur 3 mit der Position (N) zusammenfällt, befindet und die Luftfahrzeuge 10 in regelmäßigen Abständen 20 entlang einer, dieser Spitze gegenüberliegenden Seite angeordnet sind.

Das Verfahren beziehungsweise das System 1 ist ansonsten - mit Ausnahme der Anzahl der dargestellten Luftfahrzeuge 10 - ident mit dem zuvor beschriebenen Verfahren beziehungsweise System 1. So kann mit dem in Figur 3 dargstellten System 1 und der räumlichen Anordnung 22 der Luftfahrzeuge 10 in Bezug auf das zu filmende Objekt 12 beispielsweise ein vereinfachtes "Spatial Flow Motion"- oder ein vereinfachtes "Bullet-Time"-Verfahren zur Aufnahme des Objekts 12 angewandt werden.

Alternativ oder zusätzlich zu der Bodenwarmsteuereinheit 15 kann jedes Luftfahrzeug 10 eines erfindungsgemäßen Systems 1 eine eigene, vorzugsweise als modulare Schwarmsteuereinheit 18 ausgebildete, Schwarmsteuereinheit aufweisen. Figur 4 zeigt beispielhaft drei derartige Luftfahrzeuge 10, wobei das zu filmende Objekt 12 in diesem Beispiel ein Ballon ist, der sich im Luftraum befindet. Die modulare Schwarmsteuereinheit 18 kann beispielsweise an ein handelsübliches, zum Einzelflug hergestelltes Luftfahrzeug 10, insbesondere an eine handelsübliche Drohne, anbringbar und gegebenenfalls abnehmbar ausgebildet sein. Dies kann mittels jeder Art von lösbarer oder unlösbarer Befestigung durchführbar sein, beispielsweise durch eine Steck-, Klebe-, oder Schraubverbindung. Alternativ kann die modulare Schwarmsteuereinheit 18 in ein einteiliges Gehäuse des Luftfahrzeugs 10 eingebracht werden, beispielsweise zugänglich über eine Abdeckung.

Jede modulare Schwarmsteuereinheit 18 ist zum Steuern der Flugsteuereinheit 3 und des Ausrichtemittels 8 des zugehörigen Luftfahrzeugs 10 und zum drahtlosen Kommunizieren mit den anderen modularen Schwarmsteuereinheiten 18 und gegebenenfalls mit der Bodenschwarmsteuereinheit 15 ausgebildet. Hierdurch können die modularen Schwarmsteuereinheiten 18, also die Schwarmsteuereinheiten, die Flugsteuereinheiten 3 und die Ausrichtemittel 8 während einer Aufnahme von zumindest einem zu filmenden und sich bewegenden Objekt 12 im Wesentlichen gemäß obiger Beschreibung steuern, wobei (i) die räumliche Anordnung 13 oder 22 der Luftfahrzeuge 10 in Bezug auf das Objekt 12 und (ii) die Ausrichtung der optischen Achse 7 jeder Kamera 6 in Bezug auf das Objekt 12 und/ oder in Bezug auf die Ausrichtung/en der optischen Achse/n 7 der anderen Kamera/s 6 im Wesentlichen aufrechterhalten und gegebenenfalls im Wesentlichen in Echtzeit angepasst wird. So kann beispielsweise einerseits auf die Bodenschwarmsteuereinheit 15 verzichtet werden, und andererseits können die modularen Schwarmsteuereinheiten 18 und die Bodenschwarmsteuereinheit 15 die Luftfahrzeuge 10 gemeinsam steuern, beispielsweise um sich zu ergänzen oder gegenseitig als Backup-Steuerung abzusichern.

Optional kann zusätzlich das zu filmende Objekt 12 mit einer erfindungsgemäßen modularen Schwarmsteuereinheit 18 gemäß voriger Beschreibung ausgerüstet sein.

Die Anzahl der in den Figuren dargestellten Luftfahrzeuge 10 ist aus Gründen der Übersichtlichkeit der Darstellung geringer als es in der Praxis der Fall sein kann, wo bis zu mehrere einhundert (100) Luftfahrzeuge 10 zum Einsatz kommen können.

Alternativ kann jedes Luftfahrzeug 10 Zusatzeinheiten aufweisen, beispielsweise ein LED-Leuchtmittel, ein LASER-Leuchtmittel, einen Lichtreflektor, eine Feuerwerks-Abschusseinrichtung, ein Raucherzeugungsmittel, ein Anzeigemittel, einen Lautsprecher, ein Mikrofon, eine Bilderkennungseinheit, einen Temperatursensor, einen Feuchtigkeitssensor, eine Transporteinheit für Waren und Pakete, usw., wobei alle Kombinationen dieser Zusatzeinheiten denkbar sind.

Es kann erwähnt werden, dass ein erfindungsgemäßes Luftfahrzeug oder System als Observationssystem, Überwachungssystem und/ oder Rettungssystem, beispielsweise im Falle einer Katastrophe eingesetzt werden kann. Hierbei kann beispielsweise mittels eines großen Schwarmverbunds von Luftfahrzeugen die Situation mit Hilfe der Kameras beobachtet werden.

Der Begriff unbemanntes Luftfahrzeug ist im Rahmen dieser Erfindung sehr breit auszulegen und könnte beispielsweise auch Heißluftballone, Zeppeline, Modellflugzeuge oder Modellhubschrauber umfassen.

## Patentansprüche

1. System (1) zum Steuern von zumindest zwei unbemannten Luftfahrzeugen (10) in einem Schwarmflug, wobei jedes Luftfahrzeug (10) eine Flugsteuereinheit (3) zum Steuern der Flugbahn des Luftfahrzeugs (10) mittels einer Antriebseinheit (2) und eine, mittels einem Ausrichtemittel (8) zumindest einachsig drehbare Kamera (6) aufweist, wobei in dem System (1) zumindest eine Schwarmsteuereinheit (15, 18) zum drahtlosen Kommunizieren mit den Luftfahrzeugen (10) vorgesehen ist, wobei
die zumindest eine Schwarmsteuereinheit (15, 18) dazu ausgebildet ist, die Flugsteuereinheiten (3) und die Ausrichtemittel (8) während einer Aufnahme von zumindest einem zu filmenden und sich bewegenden Objekt (12) derart zu steuern, dass eine räumliche Anordnung (13, 22) der Luftfahrzeuge (10) in Bezug auf das Objekt (12) und die Ausrichtung der optischen Achse (7) jeder Kamera (6) in Bezug auf das Objekt (12) und/ oder in Bezug auf die Ausrichtung/en der optischen Achse/n (7) der anderen Kamera/s (6) im Wesentlichen aufrechterhalten und gegebenenfalls im Wesentlichen in Echtzeit angepasst wird und, dass die Schwarmsteuereinheit (15, 18) die Ausrichtung der optischen Achse (7) einer Kamera (6) in Bezug auf die Ausrichtung/en der optischen Achse/n (7) der anderen Kamera/s (6) derart aufrechterhält und/ oder anpasst, dass ein Sichtfeld dieser Kamera (6) frei von einem Luftfahrzeug (10) und/ oder einer Kamera (6) des Systems (1) ist.

2. System (1) gemäß Anspruch 1, wobei die zumindest eine Schwarmsteuereinheit (15, 18) zum Steuern, insbesondere Aktiveren und Deaktivieren, der Kameras (6) ausgebildet ist.

3. System (1) gemäß Anspruch 1 oder 2, wobei in der räumlichen Anordnung (22) die Luftfahrzeuge (10) entlang einer im Wesentlichen geraden Linie angeordnet sind, wobei sich das zu filmende Objekt (12) vorzugsweise im Wesentlichen parallel zu der Linie bewegt und die Abstände (20) benachbarter Luftfahrzeuge (10) entlang der Linie vorzugsweise im Wesentlichen gleich sind.

4. System (1) gemäß Anspruch 1 oder 2, wobei in der räumlichen Anordnung (13) die Luftfahrzeuge (10) entlang einer im Wesentlichen ebenen oder schraubenförmigen Kreisbahn um eine Mittelpunktsachse (19) angeordnet sind, wobei sich das zu filmende Objekt (12) vorzugsweise im Bereich der Mittelpunktsachse (19) befindet, wobei die Abstände (20) benachbarter Luftfahrzeuge (10) entlang der Kreisbahn vorzugsweise im Wesentlichen gleich sind und sich die Kreisbahn in einer, gegebenenfalls projizierten, Kreisbahnebene entlang eines Winkels von zumindest 90 Grad, vorzugsweise von zumindest 180 Grad, mehr vorzugsweise von zumindest 270 Grad, besonders vorzugsweise von zumindest 360 Grad, erstreckt.

5. System (1) gemäß Anspruch 1 oder 2, wobei zumindest eines der Luftfahrzeuge (10) zumindest zwei Kameras (6) aufweist, wobei die Kameras (6) in einer festen geometrischen Anordnung, vorzugsweise entlang einer im Wesentlichen ebenen oder schraubenförmigen Kreisbahn, an dem Luftfahrzeug (10) oder dem Ausrichtemittel (8) angebracht sind, oder dass zumindest zwei Luftfahrzeuge (10) gemeinsam zumindest zwei Kameras (6) aufweisen, wobei die Kameras (6) in einer festen geometrischen Anordnung, vorzugsweise entlang einer im Wesentlichen ebenen oder schraubenförmigen Kreisbahn, an einem gemeinsamen Haltemittel oder einem gemeinsamen Ausrichtemittel angebracht sind.

6. System (1) gemäß einem der vorhergehenden Ansprüche, wobei die Luftfahrzeuge (10) jeweils zumindest eine Sensoreinheit (21) zum Ermitteln von Abstandsinformationen aufweisen, wobei die Schwarmsteuereinheit (15, 18) dazu ausgebildet ist, die Anordnung der Luftfahrzeuge (10) und/ oder der optischen Achsen (7) der Kameras (6) anhand der Abstandsinformationen aufrecht zu erhalten und/ oder anzupassen.

7. System (1) gemäß einem der vorhergehenden Ansprüche, wobei das zu filmende Objekt (12) ein Positionsbestimmungsmittel (24) zum Ermitteln seiner Positionen aufweist, wobei die Schwarmsteuereinheit (15, 18) zur drahtlosen Kommunikation mit dem Positionsbestimmungsmittel (24) und weiters dazu ausgebildet ist, die Anordnung der Luftfahrzeuge (10) und/ oder der optischen Achsen (7) der Kameras (6) anhand der Positionen des zu filmenden Objekts (12) aufrecht zu erhalten und/ oder anzupassen.

8. System (1) gemäß einem der vorhergehenden Ansprüche, umfassend zumindest zwei unbemannte Luftfahrzeuge, wobei jedes Luftfahrzeug (10) eine der zumindest einen, vorzugsweise modularen, Schwarmsteuereinheit (18) aufweist, die zum Steuern der Flugsteuereinheit (3) und des Ausrichtemittels (8) des Luftfahrzeugs (10) und zum drahtlosen Kommunizieren mit den anderen Schwarmsteuereinheiten (15, 18) ausgebildet ist.

9. Verfahren zum drahtlosen Steuern von zumindest zwei unbemannten Luftfahrzeugen (10) in einem Schwarm mittels zumindest einer Schwarmsteuereinheit (15, 18), wobei jedes Luftfahrzeug (10) eine Flugsteuereinheit (3) und eine, mittels einem Ausrichtemittel (8) zumindest einachsig drehbare Kamera (6) aufweist, wobei die zumindest eine Schwarmsteuereinheit (15, 18) dazu ausgebildet ist, die Flugsteuereinheiten (3) und die Ausrichtemittel (8) anhand der folgenden Verfahrensschritte zu steuern:
A) Ansteuern der Luftfahrzeuge (10) in eine räumliche Anordnung (13, 22) in Bezug auf zumindest ein zu filmendes Objekt (12);
B) Ausrichten der optischen Achse (7) jeder Kamera (6) in Bezug auf das Objekt (12) und/ oder in Bezug auf die Ausrichtung/en der optischen Achse/n (7) der anderen Kamera/s (6);
C) Aufrechterhalten und gegebenenfalls Anpassen, im Wesentlichen in Echtzeit, der räumlichen Anordnung (13, 22) der Luftfahrzeuge (10) in Bezug auf das sich bewegende Objekt (12) und der Ausrichtung der optischen Achse (7) jeder Kamera (6) in Bezug auf das sich bewegende Objekt (12) und/ oder in Bezug auf die Ausrichtung/en der optischen Achse/n (7) der anderen Kamera/s (6), wobei jedes Luftfahrzeug (10) eine, vorzugsweise modulare, Schwarmsteuereinheit (18) aufweist und wobei in dem Verfahrensschritt C) die räumliche Anordnung (13, 22) der Luftfahrzeuge (10) in Bezug auf das sich bewegende Objekt (12) und die Ausrichtung der optischen Achse (7) jeder Kamera (6) in Bezug auf das sich bewegende Objekt (12) und/ oder in Bezug auf die Ausrichtung/en der optischen Achse/n (7) der anderen Kamera/s (6) im Wesentlichen in Echtzeit mittels der Schwarmsteuereinheiten (15, 18) angepasst wird.

10. Verfahren gemäß Anspruch 9, wobei die Schwarmsteuereinheit (15, 18) in dem Verfahrensschritt C) die Kameras (6) der Luftfahrzeuge (10) steuert, insbesondere aktiviert oder deaktiviert.

11. Verfahren gemäß Anspruch 9 oder 10, wobei die Schwarmsteuereinheit (15, 18) die Anordnung der Luftfahrzeuge (10) und/ oder der optischen Achsen (7) der Kameras (6) anhand von durch Sensoreinheiten (21) der Luftfahrzeuge (10) ermittelten Abstandsinformationen aufrechterhält und/ oder anpasst.

12. Verfahren gemäß einem der Ansprüche 9 bis 11, wobei die Schwarmsteuereinheit (15, 18) die Anordnung der Luftfahrzeuge (10) und/ oder der optischen Achsen (7) der Kameras (6) anhand von, durch ein Positionsbestimmungsmittel (24) ermittelte Positionen des zu filmenden Objekts (12) aufrechterhält und/ oder anpasst.

## Claims

1. A system (1) for controlling at least two unmanned aerial vehicles (10) in a flight formation, wherein each aerial vehicle (10) has a flight control unit (3) for controlling the flight path of the aerial vehicle (10) by means of a drive unit (2) and a camera (6) that may be rotated by means of an orientation means (8) at least about one axis, wherein in the system (1) there is provided at least one flight formation control unit (15, 18) for the wireless communication with the aerial vehicles (10), wherein
the at least one flight formation control unit (15, 18) is configured to control the flight control units (3) and the orientation means (8) during a recording of at least one moving object (12) that is to be filmed in such a way that a spatial arrangement (13, 22) of the aerial vehicles (10) in relation to the object (12) and the orientation of the optical axis (7) of each camera (6) in relation to the object (12) and/or in relation to the orientation/s of the optical axis / axes (7) of the other camera/s (6) is substantially maintained and optionally adjusted substantially in real time, and wherein the flight formation control unit (15, 18) maintains and/or adjusts the orientation of the optical axis (7) of a camera (6) in relation to the orientation/s of the optical axis / axes (7) of the other camera/s (6) such that a field of vision of this camera (6) is free of an aerial vehicle (10) and/or a camera (6) of the system (1).

2. A system (1) according to claim 1, wherein the at least one flight formation control unit (15, 18) is configured to control, in particular activate and deactivate, the cameras (6).

3. A system (1) according to claim 1 or 2, wherein the aerial vehicles (10) are arranged in the spatial arrangement (22) along a substantially straight line, wherein the object (12) to be filmed moves preferably substantially in parallel to the line and the distances (20) between neighbouring aerial vehicles (10) are preferably substantially equal along the line.

4. A system (1) according to claim 1 or 2, wherein in the spatial arrangement (13) the aerial vehicles (10) are arranged along a substantially plane or spiral-like orbit around a central axis (19), wherein the object (12) to be filmed is situated preferably in the area of the central axis (19), wherein the distances (20) between neighbouring aerial vehicles (10) along the orbit are preferably substantially equal and the orbit extends in an, optionally projected, orbit plane at an angle of at least 90 degrees, preferably of at least 180 degrees, more preferred of at least 270 degrees, especially preferred of at least 360 degrees.

5. A system (1) according to claim 1 or 2, wherein at least one of the aerial vehicles (10) has at least two cameras (6), wherein the cameras (6) are attached in a stationary geometrical arrangement, preferably along an substantially plane or spiral-like orbit, at the aerial vehicle (10) or the orientation means (8), or that at least two aerial vehicles (10) together have at least two cameras (6), wherein the cameras (6) are attached in a stationary geometrical arrangement, preferably along a substantially plane or spiral-like orbit, at a shared holding means or a shared orientation means.

6. A system (1) according to any of the preceding claims, wherein the aerial vehicles (10) each have at least one sensor unit (21) for establishing distance information, wherein the flight formation control unit (15, 18) is configured to maintain and/or adjust the arrangement of the aerial vehicles (10) and/or of the optical axes (7) of the cameras by way of the distance information.

7. A system (1) according to any of the preceding claims, wherein the object (12) to be filmed has a position determining means (24) for establishing the positions thereof, wherein the flight formation control unit (15, 18) is configured for the wireless communication with the position determining means (24) and is further configured to maintain and/or adjust the arrangement of the aerial vehicles (10) and/or of the optical axes (7) of the cameras (6) by way of the positions of the object (12) to be filmed.

8. System (1) according to any of the preceding claims, comprising at least two aerial vehicles, wherein each aerial vehicle (10) has one of the at least one, preferably modular, flight formation control unit (18), which is configured to control the flight control unit (3) and the orientation means (8) of the aerial vehicle (10) and for the wireless communication with the other flight formation control units (15, 18).

9. A method for the wireless control of at least two unmanned aerial vehicles (10) in a flight formation by means of at least one flight formation control unit (15, 18), wherein each aerial vehicle (10) has a flight control unit (3) and a camera (6) that may be rotated by means of an orientation means (8) at least about one axis, wherein the at least one flight formation control unit (15, 18) is configured to control the flight control units (3) and the orientation means (8) by way of the following method steps:
A) controlling the aerial vehicles (10) into a spatial arrangement (13, 22) in relation to at least one object (12) to be filmed;
B) orienting the optical axis (7) of each camera (6) in relation to the object (12) and/or in relation to the orientation/s of the optical axis / axes (7) of the other camera/s (6);
C) maintaining and optionally adjusting, substantially in real time, the spatial arrangement (13, 22) of the aerial vehicles (10) in relation to the moving object (12) and the orientation of the optical axis (7) of each camera (6) in relation to the moving object (12) and/or in relation to the orientation/s of the optical axis / axes (7) of the other camera/s (6), wherein each aerial vehicle (10) has a, preferably modular, flight formation control unit (18), wherein in method step C) the spatial arrangement (13, 22) of the aerial vehicles (10) in relation to the moving object (12) and the orientation of the optical axis (7) of each camera (6) in relation to the moving object (12) and/or in relation to the orientation/s of the optical axis / axes (7) of the other camera/s (6) is adjusted substantially in real time by means of the flight formation control units (15, 18).

10. A method according to claim 9, wherein the flight formation control unit (15, 18) controls, in particular activates or deactivates, the cameras (6) of the aerial vehicles (10) in the method step C).

11. A method according to claim 9 or 10, wherein the flight formation control unit (15, 18) maintains and/or adjusts the arrangement of the aerial vehicles (10) and/or the optical axes (7) of the cameras (6) by way of distance information established by sensor units (21) of the aerial vehicles (10).

12. A method according to any of claims 9 to 11, wherein flight formation control unit (15, 18) maintains and/or adjusts the arrangement of the aerial vehicles (10) and/or of the optical axes (7) of the cameras (6) by way of positions of the object (12) to be filmed that are established by means of a position determining means (24).

## Revendications

1. Système (1) de commande d'au moins deux avions sans pilote (10) dans un essaim, chaque avion (10) comportant une unité de commande de vol (3) pour contrôler la trajectoire de vol de l'avion (10) au moyen d'une unité motrice (2) et une caméra (6) pouvant pivoter sur au moins un axe au moyen d'un moyen d'orientation (8), au moins une unité de commande d'essaim (15, 18) étant prévue dans le système (1) pour communiquer par radio avec les avions (10), dans lequel l'au moins une unité de commande d'essaim (15, 18) est agencée pour contrôler les unités de commande de vol (3) et les moyens d'orientation (8) pendant un enregistrement d'au moins un objet en mouvement à filmer (12), de telle sorte qu'une disposition spatiale (13, 22) des avions (10) par rapport à l'objet (12) et l'orientation de l'axe optique (7) de chaque caméra (6) par rapport à l'objet (12) et/ou par rapport à l'orientation/aux orientations de l'axe/des axes optique(s) (7) de l'autre/des autres caméra(s) sont sensiblement maintenus et, le cas échéant, adaptés sensiblement en temps réel, et que l'unité de commande d'essaim (15, 18) maintient et/ou adapte l'orientation de l'axe optique (7) d'une caméra (6) par rapport à l'orientation/aux orientations de l'axe/des axes optique(s) (7) de l'autre/des autres caméra(s) (6) de telle sorte qu'un champ visuel de cette caméra (6) est dépourvu d'avion (10) et/ou de caméra (6) du système (1).

2. Système (1) selon la revendication 1, dans lequel l'au moins une unité de commande d'essaim (15, 18) est agencée pour contrôler, en particulier pour activer et désactiver, les caméras (6).

3. Système (1) selon la revendication 1 ou 2, dans lequel, dans la disposition spatiale (22), les avions (10) sont disposés le long d'une ligne sensiblement droite, l'objet à filmer (12) se déplaçant de préférence sensiblement parallèlement à cette ligne et les distances (20) entre les avions (10) voisins le long de la ligne étant de préférence sensiblement égales.

4. Système (1) selon la revendication 1 ou 2, dans lequel, dans la disposition spatiale (13), les avions (10) sont disposés le long d'une trajectoire circulaire sensiblement plane ou hélicoïdale autour d'un axe central (19), l'objet à filmer (12) se trouvant de préférence dans la région de l'axe central (19), les distances (20) entre les avions (10) voisins le long de la trajectoire circulaire étant de préférence sensiblement égales et le circuit circulaire s'étendant dans un plan de circuit circulaire, éventuellement projeté, le long d'un angle d'au moins 90 degrés, de préférence d'au moins 180 degrés, plus préférablement d'au moins 270 degrés et de manière particulièrement préférée d'au moins 360 degrés.

5. Système (1) selon la revendication 1 ou 2, dans lequel au moins un des avions (10) comporte au moins deux caméras (6), lesquelles caméras (6) sont montées dans une disposition géométrique fixe, de préférence le long d'une trajectoire circulaire sensiblement plane ou hélicoïdale, sur l'avion (10) ou le moyen d'orientation (8), ou qu'au moins deux avions (10) comportent en commun au moins deux caméras (6), lesquelles caméras (6) sont montées dans une disposition géométrique fixe, de préférence le long d'une trajectoire circulaire sensiblement plane ou hélicoïdale, sur un moyen de fixation commun ou un moyen d'orientation commun.

6. Système (1) selon une des revendications précédentes, dans lequel les avions (10) comportent chacun au moins une unité de détection (21) pour générer des informations de distance, l'unité de commande d'essaim (15, 18) étant agencée pour maintenir et/ou adapter la disposition des avions (10) et/ou des axes optiques (7) des caméras (6) par le biais des informations de distance.

7. Système (1) selon une des revendications précédentes, dans lequel l'objet à filmer (12) comporte un moyen de détermination de position (24) pour déterminer ses positions, l'unité de commande d'essaim (15, 18) étant agencée pour communiquer par radio avec le moyen de détermination de position (24), puis pour maintenir et/ou adapter la disposition des avions (10) et/ou des axes optiques (7) des caméras (6) par le biais des positions de l'objet à filmer (12).

8. Système (1) selon une des revendications précédentes, comprenant au moins deux avions sans pilote, dans lequel chaque avion (10) comporte une unité de commande d'essaim (18) de préférence modulaire d'au moins un, qui est agencée pour contrôler l'unité de commande de vol (3) et le moyen d'orientation (8) de l'avion (10) et pour communiquer par radio avec les autres unités de commande d'essaim (15, 18).

9. Procédé pour contrôler par radio au moins deux avions sans pilote (10) dans un essaim au moyen d'au moins une unité de commande d'essaim (15, 18), chaque avion (10) comportant une unité de commande de vol (3) et une caméra (6) pouvant pivoter sur au moins un axe au moyen d'un moyen d'orientation (8), l'au moins une unité de commande d'essaim (15, 18) étant agencée pour contrôler les unités de commande de vol (3) et les moyens d'orientation (8) par le biais des étapes de procédé suivantes :
A) contrôle des avions (10) dans une disposition spatiale (13, 22) par rapport à au moins un objet à filmer (12),
B) orientation de l'axe optique (7) de chaque caméra (6) par rapport à l'objet (12) et/ou par rapport à l'orientation/aux orientations de l'axe/des axes optique(s) (7) de l'autre/des autres caméra(s) (6),
C) maintien et éventuellement adaptation, sensiblement en temps réel, de la disposition spatiale (13, 22) des avions (10) par rapport à l'objet en mouvement (12) et à l'orientation de l'axe optique (7) de chaque caméra (6) par rapport à l'objet en mouvement (12) et/ou par rapport à l'orientation/aux orientations de l'axe/des axes optique(s) (7) de l'autre/des autres caméra(s) (6), chaque avion (10) comportant une unité de commande d'essaim (18) de préférence modulaire et, dans l'étape de procédé C), la disposition spatiale (13, 22) des avions (10) par rapport à l'objet en mouvement (12) et à l'orientation de l'axe optique (7) de chaque caméra (6) par rapport à l'objet en mouvement (12) et/ou par rapport à l'orientation/aux orientations de l'axe/des axes optique(s) (7) de l'autre/des autres caméra(s) (6) étant adaptée sensiblement en temps réel au moyen des unités de commande d'essaim (15, 18).

10. Procédé selon la revendication 9, selon lequel l'unité de commande d'essaim (15, 18) contrôle, en particulier active ou désactive, les caméras (6) des avions (10) dans l'étape de procédé C).

11. Procédé selon la revendication 9 ou 10, selon lequel l'unité de commande d'essaim (15, 18) maintient et/ou adapte la disposition des avions (10) et/ou des axes optiques (7) des caméras (6) par le biais d'informations de distance déterminées par les unités de détection (21) des avions (10).

12. Procédé selon une des revendications 9 à 11, selon lequel l'unité de commande d'essaim (15, 18) maintient et/ou adapte la disposition des avions (10) et/ou des axes optiques (7) des caméras (6) par le biais de positions de l'objet à filmer (12) déterminées par un moyen de détermination de position (24).
